# EUROPÄISCHE PATENTSCHRIFT

(11) **EP 3 269 589 B1**
(45) Veröffentlichungstag und Bekanntmachung des Hinweises auf die Patenterteilung: **13.11.2019**
(21) Anmeldenummer: 17181504.6
(22) Anmeldetag: 14.07.2017
(51) Int. Cl.: B60N 3/00, B64D 11/06, A47B 5/04, A47C 7/70

(54) **FLUGZEUGSITZVORRICHTUNG**
AEROPLANE SEATING DEVICE
DISPOSITIF DE SIÈGE D'AVION

(30) Priorität: 14.07.2016 DE 102016113005
(43) Veröffentlichungstag der Anmeldung: 17.01.2018
(73) Patentinhaber: Recaro Aircraft Seating GmbH & Co. KG, 74523 Schwäbisch Hall (DE)
(72) Erfinder: Gärtner, André, 74523 Schwäbisch Hall (DE); Schuler, Thomas, 80639 München (DE); Horlacher, Michael, 74523 Schwäbisch Hall (DE); Minzer, Heiko, 74523 Schwäbisch Hall (DE); Dobritz, Anne, 74523 Schwäbisch Hall (DE); Lemoussu, Jonathan Olivier, 69570 Dardilly (FR)
(74) Vertreter: Daub, Thomas

(56) Entgegenhaltungen:
- EP-A2- 2 799 338
- WO-A-87/01998
- DE-A1-102009 052 593
- US-A- 327 816
- US-A1- 2014 300 148
- US-A1- 2014 339 877

## Beschreibung

### Stand der Technik

Die Erfindung betrifft eine Flugzeugsitzvorrichtung.

Es sind bereits Flugzeugsitzvorrichtungen vorgeschlagen worden. DE102009052593 offenbart einen Fahrzeugsitz mit einer Rückenlehne, an der eine schwenkbare Tischplatte angeordnet ist. Die Tischplatte weist einen ersten Plattenabschnitt , der um eine erste Schwenkachse verschwenkbar an der Rückenlehne befestigt ist, und einen zweiten Plattenabschnitt auf, der um eine zweite Schwenkachse verschwenkbar an dem ersten Plattenabschnitt befestigt ist. Der erste Plattenabschnitt kann von einer im Wesentlichen vertikalen Nichtgebrauchsposition um die erste Schwenkachse in eine im Wesentlichen horizontale Gebrauchsposition verschwenkt werden, während der zweite Plattenabschnitt um die zweite Schwenkachse von einer Nichtgebrauchsstellung in eine Gebrauchsstellung verschwenkt werden kann. Der zweite Plattenabschnitt in dessen Gebrauchsstellung ist unter Abstützung des ersten Plattenabschnitts in dessen Gebrauchsposition an der Rückenlehne abstützbar.

Die Aufgabe der Erfindung besteht insbesondere darin, eine gattungsgemäße Vorrichtung mit verbesserten Eigenschaften hinsichtlich eines Gewichts und eines Raumbedarfs bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Sitzvorrichtung, insbesondere Flugzeugsitzvorrichtung, nach Anspruch 1 vorgeschlagen. Unter einer "Flugzeugsitzvorrichtung" soll dabei insbesondere eine Vorrichtung verstanden werden, die zumindest einen Teil eines Flugzeugsitzes, oder einen gesamten Flugzeugsitz ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Dabei weist der Flugzeugsitz einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Grundkörper" soll dabei insbesondere ein Körper aus einem oder mehreren Elementen verstanden werden, der zumindest eine Grundstruktur, insbesondere eine Tragstruktur, ausbildet, die dazu vorgesehen ist, für eine entsprechende Funktion der entsprechenden Vorrichtung Kräfte aufzunehmen und/oder weiterzuleiten. Unter einer "Funktionsstellung" soll dabei insbesondere eine Stellung verstanden werden, in die der Grundkörper verstellt werden kann und in dieser Stellung dann, möglicherweise nach einem Verriegelungsvorgang gehalten ist. Dabei ist eine erste Funktionsstellung als eine Gebrauchsstellung ausgebildet, in der der Grundkörper in seiner Hauptfunktion genutzt werden kann. Eine zweite Funktionsstellung ist dabei vorzugsweise als eine Verstaustellung ausgebildet, in der der Grundkörper platzsparend an der Sitzvorrichtung angeordnet ist und nicht in seiner Hauptfunktion genutzt werden kann. Unter einer "Tiefenerstreckung" soll dabei insbesondere eine Erstreckung eines Elements, wie insbesondere des Grundkörpers in einer Richtung verstanden werden, insbesondere eine Erstreckung des Grundkörpers senkrecht zu einer Haupterstreckungsebene des Grundkörpers. Die Haupterstreckungsebene wird dabei vorzugsweise von einer Oberseite des Grundkörpers gebildet. Ist der Grundkörper als ein Tischgrundkörper ausgebildet, wird die Haupterstreckungsebene vorzugsweise von der Tischfläche des Tischgrundkörpers gebildet. Durch eine erfindungsgemäße Ausgestaltung kann vorteilhaft ein Grundkörper bereitgestellt werden, der in zwei unterschiedlichen Funktionsstellungen unterschiedliche Erstreckungen aufweist, wodurch vorzugsweise ein Grundkörper bereitgestellt werden kann, der in einer Funktionsstellung, vorzugsweise einer Verstaustellung, besonders wenig Raum benötigt und so platzsparend verstaut werden kann. Dadurch kann vorteilhaft eine besonders platzsparende und vorteilhafte Sitzvorrichtung bereitgestellt werden.

Weiter wird vorgeschlagen, dass die Tiefenersteckung in den zumindest zwei Funktionsstellungen dazu vorgesehen ist, lediglich in einem Teilbereich des Grundkörpers geändert zu werden. Unter einem "Teilbereich des Grundkörpers" soll dabei insbesondere ein Bereich, wie insbesondere ein vorderer, einem ersten Ende des Grundkörpers zugewandter Bereich oder ein hinterer, einem zweiten Ende des Grundkörpers zugewandter Bereich verstanden werden. Dadurch kann eine besonders vorteilhafte Veränderung der Tiefenerstreckung zwischen den Funktionsstellungen erreicht werden. Es wird weiter vorgeschlagen, dass der Grundkörper als ein Tischgrundkörper ausgebildet ist. Unter einem "Tischgrundkörper" soll dabei insbesondere ein Körper verstanden werden, der zumindest eine Tischfläche ausbildet, die in zumindest einer Funktionsstellung zumindest im Wesentlichen parallel zu einer Aufständerebene der Sitzvorrichtung ausgerichtet ist, wobei die Tischfläche dazu vorgesehen ist, dass von einem Passagier Gegenstände darauf abgestellt werden können. Dadurch kann vorteilhaft ein Tisch für die Sitzvorrichtung bereitgestellt werden, die vorteilhaft platzsparend verstaut werden kann.

Unter einer "Platte" soll insbesondere ein räumliches Element verstanden werden, das, in einer Abwicklung in einer Ebene betrachtet, in einem Querschnitt senkrecht zur Ebene eine unrunde Querschnittsfläche aufweist und senkrecht zur Ebene eine insbesondere zumindest im Wesentlichen gleichbleibende Materialstärke aufweist, die weniger als 50%, vorzugsweise weniger als 25% und besonders bevorzugt weniger als 10% einer Flächenerstreckung des räumlichen Elements parallel zur Ebene, insbesondere einer kleinsten Flächenerstreckung des Elements parallel zur Ebene beträgt. Unter "verschwenkbar miteinander verbunden" soll dabei insbesondere verstanden werden, dass die beiden Platten an der Stelle, an der sie miteinander verbunden sind in einer Ausrichtung zueinander veränderbar sind und dabei insbesondere einen Winkel, den die beiden Platten zwischen einander aufspannen, verändern. Es ist grundsätzlich auch denkbar, dass die erste Platte und die zweite Platte einstückig miteinander ausgebildet sind und nicht durch ein separates Scharnier an dem einen Ende schwenkbar miteinander gekoppelt sind, sondern durch einen flexiblen Übergang zwischen erster Platte und zweiter Platte, über den die beiden Platten zueinander verschwenkt werden können. Dadurch kann der Grundkörper besonders einfach ausgebildet werden und eine Tiefenerstreckung besonders einfach veränderlich gestaltet werden.

Weiter wird vorgeschlagen, dass der Grundkörper ein Scharnierelement aufweist, das die erste Platte und die zweite Platte an dem ersten Ende miteinander verbindet. Unter einem "Scharnierelement" soll dabei insbesondere ein Element verstanden werden, über das zumindest zwei Elemente, wie insbesondere die beiden Platten, welche den Grundkörper ausbilden, schwenkbar zueinander gekoppelt sind. Dabei kann ein Scharnierelement als ein Filmscharnier, als ein einfaches Scharnier, als ein Stangenscharnier, oder als ein anderes, dem Fachmann als sinnvoll erscheinendes Scharnier ausgebildet sein. Dabei ist es denkbar, dass die beiden Platten an ihrem ersten Ende getrennt voneinander oder einstückig ausgebildet sind. Dadurch können die Platten besonders einfach und vorteilhaft schwenkbar miteinander verbunden werden.

Unter einem "Gelenkelement" soll dabei insbesondere eine Lagerung verstanden werden, über die der Grundkörper zumindest zwischen seinen zumindest zwei Funktionsstellungen verstellt, insbesondere verschwenkt werden kann. Über das Gelenkelement lässt sich der Grundkörper vorzugsweise zumindest über 45 Grad, vorteilhaft über 60 Grad und in einer besonders vorteilhaften Ausgestaltung um 80 Grad zwischen der Gebrauchsstellung und der Verstaustellung des Grundkörpers verschwenken. Unter einer "Führung" soll dabei insbesondere eine Führung verstanden werden, über die zumindest ein Element entlang eines Verschiebewegs, zu einem anderen Element verschoben werden kann. Dabei kann die Führung als eine Linearführung mit einer geraden Verschiebeachse, oder als eine Radialführung mit einer gekrümmten Verschiebebahn, ausgebildet sein. Kann auch Mischform zwischen verscheidnene Lagerungen sein.radial und linear. Dadurch kann der Grundkörper besonders vorteilhaft gelagert werden.

Weiter wird vorgeschlagen, dass die Führung wenigstens eine Nut aufweist, die in das Gelenkelement eingebracht ist. Grundsätzlich ist es auch denkbar, dass die Führung eine Nut aufweist, die in die Platte, oder ein mit der Platte verbundenes Element eingebracht ist, wobei das Gelenkelement ein Formschlusselement aufweisen würde, das in diese Nut eingreift. Dadurch kann vorteilhaft die Führung besonders vorteilhaft ausgebildet werden. Es wird weiter vorgeschlagen, dass die zweite Platte des Grundkörpers wenigstens ein Befestigungselement aufweist, das in die zumindest eine Nut der Führung eingreift. Unter einem "Befestigungselement" soll dabei insbesondere ein Element verstanden werden, dass für eine formschlüssige Verbindung mit einem weiteren Element, wie insbesondere mit der Nut der Führung vorgesehen ist. Dabei ist das Formschlusselement vorzugsweise als ein Stift, eine Schraube oder als ein Hakenelement ausgebildet. Dadurch kann die zweite Platte des Grundkörpers besonders einfach mit dem Gelenkelement verbunden werden.

Ferner wird vorgeschlagen, dass der Grundkörper als eine Armlehne ausgebildet ist. Unter einer "Armlehne" soll dabei insbesondere ein Element verstanden werden, welches seitlich einer Rückenlehne des Flugzeugsitzes angeordnet ist und insbesondere einen seitlich eines Sitzbereichs angeordneten Armablagebereich für einen auf dem Flugzeugsitz sitzenden Passagier ausbildet. Dabei kann die Armlehne auch zwischen zwei Flugzeugsitzen einer Sitzreihe aus mehreren Flugzeugsitzen angeordnet sein. Dadurch kann der Grundkörper besonders vorteilhaft ausgebildet werden und eine besonders platzsparende Armlehne bereitgestellt werden.

Des Weiteren wird vorgeschlagen, dass der Grundkörper wenigstens ein Stützelement aufweist, das zur Stabilisierung zwischen der ersten Platte und der zweiten Platte angeordnet sind. Unter einem "Stützelement" soll dabei insbesondere ein Element verstanden werden, dass zur Übertragung von Kräften zwischen zwei Elementen, wie insbesondere der ersten Platte und der zweiten Platte angeordnet ist, um die Kraftübertragung zwischen den Elementen zu verbessern und dadurch die erste und die zweite Platte, also insbesondere den Grundkörper zu versteifen. Dadurch kann der Grundkörper besonders vorteilhaft steif ausgebildet werden, so dass dieser Belastungen während eines Betriebs vorteilhaft aufnehmen kann, ohne verformt zu werden.

Die erfindungsgemäße Sitzvorrichtung soll hierbei nicht auf die oben beschriebene Anwendung und Ausführungsform beschränkt sein. Insbesondere kann die erfindungsgemäße Sitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer erfindungsgemäßen Sitzvorrichtung in einem ersten Ausführungsbeispiel mit einer Tischvorrichtung in einer Verstaustellung,
- Fig. 2: eine weitere schematische Ansicht der Sitzvorrichtung mit der Tischvorrichtung in einer Gebrauchsstellung,
- Fig. 3: eine schematische Seitenansicht der Sitzvorrichtung mit der Tischvorrichtung in der Gebrauchsstellung,
- Fig. 4: eine schematische Ansicht einer Lagerung der Tischvorrichtung in der Gebrauchsstellung der Tischvorrichtung,
- Fig. 5: eine schematische Seitenansicht der Sitzvorrichtung mit der Tischvorrichtung in der Verstaustellung,
- Fig. 6: eine schematische Ansicht einer Lagerung der Tischvorrichtung in der Verstaustellung der Tischvorrichtung,
- Fig. 7: eine schematische Ansicht einer erfindungsgemäßen Sitzvorrichtung in einem zweiten Ausführungsbeispiel mit einer Armlehnenvorrichtung in einer Gebrauchsstellung,
- Fig. 8: eine schematische Seitenansicht mit der Armlehnenvorrichtung in der Gebrauchsstellung und
- Fig. 9: eine schematische Seitenansicht mit der Armlehnenvorrichtung in einer Gebrauchsstellung.

### Beschreibung der Ausführungsbeispiele

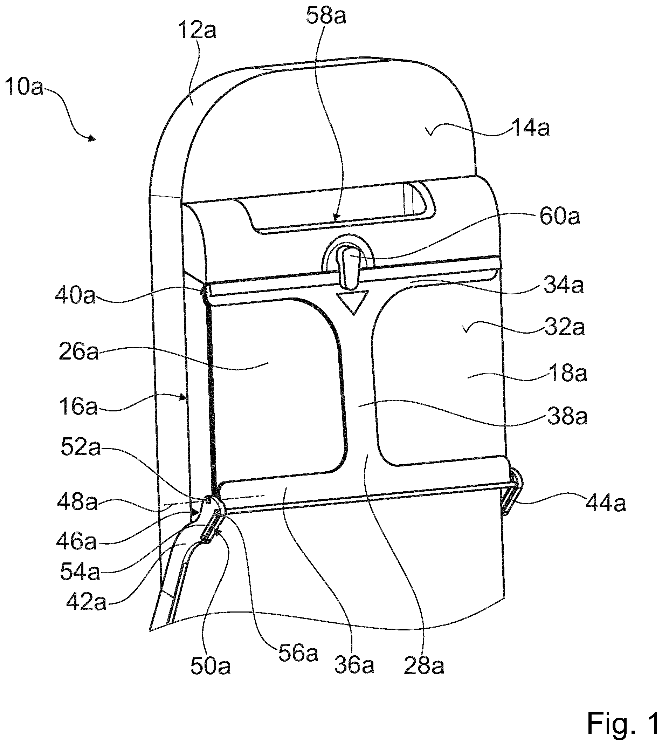

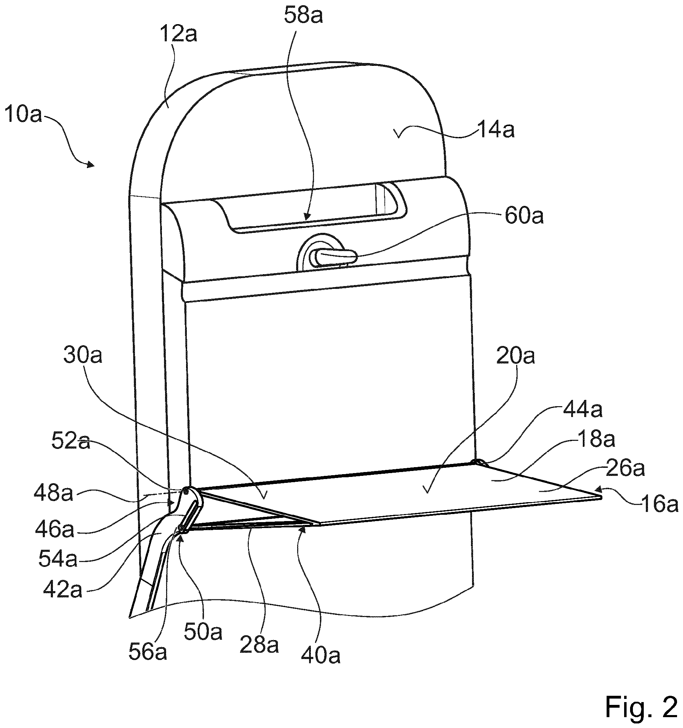

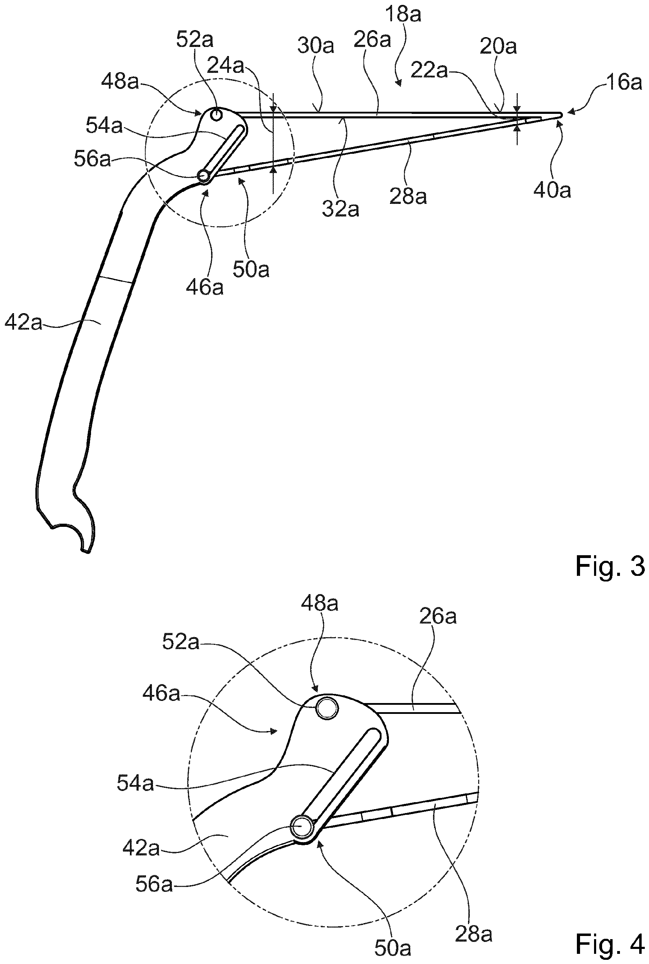

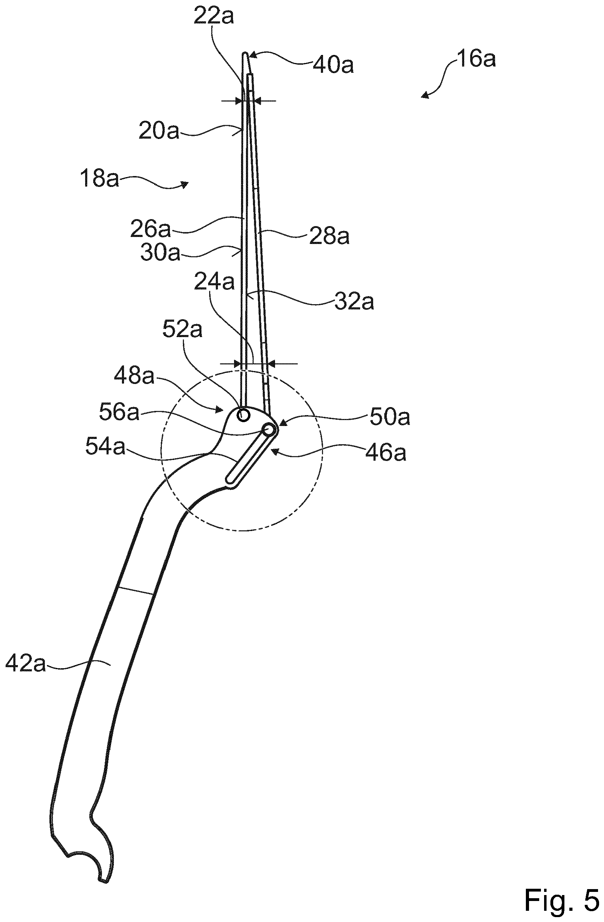

In den Figuren 1 bis 5 ist eine erfindungsgemäße Sitzvorrichtung in einem ersten Ausführungsbeispiel dargestellt. Die Sitzvorrichtung ist als eine Flugzeugsitzvorrichtung ausgebildet. Die als Flugzeugsitzvorrichtung ausgebildete Sitzvorrichtung ist Teil eines lediglich teilweise dargestellten Flugzeugsitzes 10a. Grundsätzlich ist es auch denkbar, dass die Sitzvorrichtung als Teil eines anderen Sitzes, wie beispielsweise eines Passagiersitzes in einem Bus oder anderen einem Transportmittel ausgebildet ist. Der Flugzeugsitz 10a weist eine nicht näher dargestellte Aufständereinheit auf, mittels der der Flugzeugsitz 10a auf einem Kabinenboden eines Flugzeugs aufgeständert ist. Der Kabinenboden bildet dabei eine Aufständerebene aus. Der Flugzeugsitz 10a umfasst einen nicht näher dargestellten Sitzboden, der eine Sitzfläche für einen Passagier bereitstellt. Der Flugzeugsitz umfasst eine Rückenlehne 12a. Die Rückenlehne 12a bildet eine Rückenlehenfläche aus, an der sich ein auf dem Flugzeugsitz 10a sitzender Passagier mit seinem Rücken abstützen kann. Die Rückenlehne 12a weist eine Rückseite 14a auf, die auf einer der Rückenlehenfläche abgewandten Seite der Rückenlehne 12a angeordnet ist.

Die Flugzeugsitzvorrichtung umfasst eine Tischvorrichtung 16a. Die Tischvorrichtung 16a ist dazu vorgesehen, eine Ablagefläche bereitzustellen. Die Tischvorrichtung 16a ist dazu vorgesehen an dem Flugzeugsitz 10a angebracht zu werden. Die Tischvorrichtung 16a ist dazu vorgesehen, zwischen einer Gebrauchsposition und einer Verstauposition verstellt zu werden. Die Tischvorrichtung ist dazu vorgesehen, in der Gebrauchsposition die Ablagefläche bereitzustellen. Die Tischvorrichtung 16a ist in einer Verstauposition dazu vorgesehen, möglichst platzsparend verstaut zu werden. Dabei ist die Tischvorrichtung 16a in der Verstauposition vorzugsweises an der Rückenlehne 12a angeordnet. Die Tischvorrichtung 16a ist dabei in der Verstaustellung an der Rückseite 14a der Rückenlehne 14a angebunden.

Die Sitzvorrichtung umfasst einen Grundkörper 18a. Der Grundkörper 18a weist zwei Funktionsstellungen auf. Grundsätzlich ist es auch denkbar, dass der Grundkörper 18a weitere Funktionsstellungen aufweist. Der Grundkörper 18a ist als ein Tischgrundkörper ausgebildet. Der Grundkörper 18a ist Teil der Tischvorrichtung 16a. Der als Tischgrundkörper ausgebildete Grundkörper 18a bildet zumindest in einer Funktionsstellung eine Tischoberfläche 20a aus, auf der Gegenstände abgestellt werden können. Eine erste Funktionsstellung des Grundkörpers 18a ist als eine Verstaustellung ausgebildet. Die als Verstaustellung ausgebildete Funktionsstellung des Grundkörpers 18a bildet die Verstauposition der Tischvorrichtung 16a aus. In der Verstaustellung ist der Grundkörper 18a an die Rückseite 14a der Rückenlehne 12a angeklappt. In der Verstaustellung ist die Tischoberfläche 20a, die von dem Grundkörper 18a ausgebildet wird, der Rückseite 14a der Rückenlehne zugewandt. Eine zweite Funktionsstellung des Grundkörpers 18a ist als eine Gebrauchsstellung ausgebildet. In der als Gebrauchsstellung ausgebildeten Funktionsstellung ist der Grundkörper 18a so ausgerichtet, dass die Tischoberfläche im Wesentlichen parallel zu der Aufständerebene ausgerichtet ist. Dabei ist es denkbar, dass die Tischoberfläche 20a zu der Aufständerebene einen Winkelversatz von 2 bis 6 Grad zu der Aufständerebene aufweist. In der als Gebrauchsstellung ausgebildeten Funktionsstellung ist die Tischoberfläche 20a des Grundkörpers im Wesentlichen horizontal ausgerichtet. In der als Gebrauchsstellung ausgebildeten Funktionsstellung können demnach Gegenstände auf dem als Tischgrundkörper ausgebildeten Grundkörper 18a angeordnet werden.

In den beiden Funktionsstellungen weist der Grundkörper 18a unterschiedliche Tiefenerstreckungen 22a, 24a auf. Eine Tiefenerstreckung 22a, 24a des Grundkörpers 18a ist dabei als eine Erstreckung senkrecht zu einer Haupterstreckungsebene des Grundkörpers 18a ausgebildet. Die Haupterstreckungsebene des Grundkörpers 18a ist dabei von der Tischoberfläche 20a gebildet. Dabei ist die erste Tiefenerstreckung 22a als eine vordere Tiefenerstreckung des Grundkörpers 18a ausgebildet. Die vordere Tiefenerstreckung 22a ist in einem vorderen Bereich des Grundkörpers 18a angeordnet. Der vordere Bereich des Grundkörpers 18a ist dabei als ein der Rückenlehne 12a abgewandtes Ende der Tischvorrichtung 16a ausgebildet. Die zweite Tiefenerstreckung 24a ist als eine hintere Tiefenerstreckung des Grundkörpers 18a ausgebildet. Die hintere Tiefenerstreckung 24a ist in einem hinteren Bereich des Grundkörpers 18a angeordnet. Der hintere Bereich des Grundkörpers 18a ist dabei als ein der Rückenlehne 12a zugewandtes Ende der Tischvorrichtung 16a ausgebildet. Die beiden gezeigten Tiefenerstreckungen 22a, 24a stellen dabei lediglich zwei exemplarische Tiefenerstreckungen dar. Der Grundkörper weist über seine gesamte Erstreckung zwischen dem vorderen Ende und dem hinteren Ende Tiefenerstreckungen auf, die hier aber im Detail nicht näher beschrieben werden sollen.

In der ersten, als Verstaustellung ausgebildeten Funktionsstellung sind die Tiefenerstreckungen 22a, 24a jeweils kleiner als in der als Gebrauchsstellung ausgebildeten Funktionsstellung. Die Tiefenerstreckungen 22a, 24a weisen in der als Verstaustellung ausgebildeten Funktionsstellung einen Wert auf, der kleiner ist als ein Wert der jeweiligen Tiefenerstreckung 22a, 24a in der als Gebrauchsstellung ausgebildeten Funktionsstellung. Die Tiefenerstreckung 22a an dem vorderen Ende des Grundkörpers 18a weist in der als Verstaustellung ausgebildeten Funktionsstellung einen Wert von 5 mm auf. Grundsätzlich ist es auch denkbar, dass die Tiefenerstreckung 22a an dem vorderen Ende des Grundkörpers 18a in der als Verstaustellung ausgebildeten Funktionsstellung einen Wert von 2 bis 20 mm aufweist. Die Tiefenerstreckung 22a an dem vorderen Ende des Grundkörpers 18a weist in der als Gebrauchsstellung ausgebildeten Funktionsstellung einen Wert von 8 mm auf. Die Tiefenerstreckung 24a an dem hinteren Ende des Grundkörpers 18a weist in der ersten, als Verstaustellung ausgebildeten Funktionsstellung einen Wert von 10 mm auf. Grundsätzlich ist es auch denkbar, dass die Tiefenerstreckung 24a an dem hinteren Ende des Grundkörpers 18a in der als Verstaustellung ausgebildeten Funktionsstellung einen Wert von 2 bis 20 mm aufweist. Die beiden Tiefenerstreckungen 22a, 24a weisen in der ersten, als Verstaustellung ausgebildeten Funktionsstellung einen im Wesentlichen gleichen Wert auf. In der zweiten als Gebrauchsstellung ausgebildeten Funktionsstellung weist die Tiefenerstreckung 24a am hinteren Ende des Grundkörpers 18a einen Wert von 40 mm auf. Grundsätzlich ist es auch denkbar, dass die Tiefenerstreckung 24a an dem hinteren Ende des Grundkörpers 18a in der als Gebrauchsstellung ausgebildeten Funktionsstellung einen Wert von 20 bis 100 mm aufweist.

Der Grundkörper 18a ist aus einer ersten Platte 26a und einer zweiten Platte 28a gebildet. Die beiden Platten 26a, 28a aus denen der Grundkörper 18a gebildet ist, sind an ihrem ersten, vorderen Ende miteinander verbunden. Die erste Platte 26a ist als eine obere Platte ausgebildet. Die obere Platte 26a weist eine rechteckige Form auf. Grundsätzlich ist es auch denkbar, dass die obere Platte 26a eine andere, dem Fachmann als sinnvoll erscheinende Form aufweist, beispielsweise trapezförmig. Die obere Platte 26a bildet die Tischoberfläche 20a der Tischvorrichtung 16a aus. Die obere Platte 26a weist dabei eine Oberseite 30a, die die Tischoberfläche 20a ausbildet und eine Unterseite 32a auf, die eine der Oberseite 30a gegenüberliegende Seite ausbildet. Die ober Platte 26a ist dabei als eine ebene, durchgängige Platte ausgebildet. Grundsätzlich ist es aber auch denkbar, dass die obere Platte Ausnehmungen und/ oder Erhebungen aufweist, die beispielsweise einen Tablethalter und/oder ein Becherhalter ausbilden.

Die zweite Platte 28a ist als eine untere Platte ausgebildet. Die zweite Platte 28a ist unterhalb der ersten Platte 26a angeordnet. Die zweite untere Platte 28a ist an der Tischoberfläche 20a abgewandten Unterseite 32a der ersten Platte 26a angeordnet. Die zweite Platte 28a weist im Wesentlichen die gleiche maximale Außenkontur auf wie die erste Platte 26a. Die zweite Platte 28a weist einen ersten, vorderen Teilbereich 34a auf, der eine Breite aufweist, die einer Breite der ersten Platte 26a entspricht, einen zweiten hinteren Teilbereich 36a, der eine Breite aufweist, die ebenfalls der Breite der ersten Platte 26a entspricht und einen Mittelbereich 38a, der den vorderen Teilbereich 34a und den hinteren Teilbereich 36a miteinander verbindet und wesentlich schmaler ausgebildet ist als die beiden Teilbereiche 34a, 36a. Die Teilbereiche 34a, 36a und der Mittelbereich 38a sind dabei einstückig miteinander ausgebildet und bilden so zusammen die zweite Platte 28a aus. Die zweite Platte 28a bildet eine doppel T-förmige Grundform aus. Die zweite Platte 28a weist in dem Bereich des Mittelbereichs 38a im Vergleich zu der ersten Platte 26a seitliche Ausnehmungen auf. Die Ausnehmungen erlauben es insbesondere in der Gebrauchsstellung der Tischvorrichtung 16a, dass unterhalb der Tischoberfläche eine vorteilhaft große Beinfreiheit bereitgestellt werden kann.

Die erste Platte 26a und die zweite Platte 28a sind an ihren ersten, vorderen Enden verschwenkbar miteinander verbunden. Zur Verbindung der beiden Platten 26a, 28a weist der Grundkörper 18a ein Scharnierelement 40a auf. Das Scharnierelement 40a ist als ein Filmscharnier ausgebildet. Grundsätzlich ist es auch denkbar, dass das Scharnierelement 40a auch als ein anderes, dem Fachmann als sinnvoll erscheinendes Scharnier ausgebildet ist. Über das Scharnierelement 40a sind die erste Platte 26a und die zweite Platte 28a verschwenkbar miteinander verbunden. Über das Scharnierelement 40a sind die beiden Platten 26a, 28a um einen Winkel von 30 Grad verschwenkbar. Grundsätzlich ist es auch denkbar, dass das Scharnierelement 40a die beiden Platten 26a, 28a um einen Winkel verschwenkbar sind, der in einem Bereich von 5 Grad bis 60 Grad liegt.

Die Sitzvorrichtung umfasst zwei Gelenkelemente 42a, 44a. Die Gelenkelemente 42a, 44a sind dazu vorgesehen den Grundkörper 18a schwenkbar an der Rückenlehne 12a zu verbinden. Die Gelenkelemente 42a, 44a sind als Haltearme ausgebildet. Mit einem ersten Ende sind die Gelenkelemente 42a, 44a mit der Rückenlehne 12a schwenkbar verbunden. Dabei sind die Gelenkelemente 42a, 44a mit ihrem ersten Ende in einem unteren Bereich der Rückenlehne 12a angelenkt. Die beiden Gelenkelemente 42a, 44a weisen an ihrem zweiten, dem ersten Ende gegenüberliegenden Ende jeweils eine Lagerung 46a auf. Die Lagerungen 46a sind jeweils von einem Drehlager 48a und einer Führung 50a gebildet. Über die Drehlager 48a ist die erste, obere Platte 26a drehbar zu dem jeweiligen Gelenkelement 42a, 44a gelagert. Die Drehlager 48a weisen jeweils ein Befestigungselement 52a auf. Die Befestigungselemente 52a sind dabei als Senkschrauben ausgebildet, wobei der Bereich der Befestigungselemente 52a, der kein Gewinde aufweist, drehbar in einer Aufnahme in dem entsprechenden Gelenkelement 42a, 44a gelagert ist. Dadurch ist die erste Platte 26a, welche die Tischoberfläche 20a ausbildet, schwenkbar mit den Gelenkelementen 42a, 44a verbunden. Die erste Platte ist mit einem zweiten, hinteren Ende über die Drehlager 48a mit den Gelenkelementen 42a, 44a verbunden. Die zweite, untere Platte 28a ist über die Führungen 50a mit den Gelenkelementen 42a, 44a verbunden. Die Führungen 50a weisen jeweils eine schräge Nut 54a auf. Die schrägen Nuten 54a sind als Durchgangsnuten ausgebildet und in einem Bereich eines zweiten Endes des entsprechenden Gelenkelements 42a, 44a eingebracht. Die schräge Nut 54a ist dabei jeweils an einem oberen Ende in etwa auf einer Höhe mit der entsprechenden Aufnahme für das Befestigungselement 52a und erstreckt sich nach unten hin von der Aufnahme weg. Die zweite Platte 28a weist zwei Befestigungselemente 56a auf. Die Befestigungselemente 56a sind als Formschlusselemente ausgebildet. Die Befestigungselemente 56a sind jeweils als eine Senkschraube ausgebildet und mit ihrem Gewinde fest mit der unteren, zweiten Platte 28a verbunden. Die Befestigungselemente 56a greifen in einem montierten Zustand durch die entsprechende schräge Nut 54a der entsprechenden Führung 50a ein. Über die Führungen 50a ist die zweite Platte 28a zu der ersten Platte 26a verschiebbar. Insbesondere das zweite Ende der zweiten, unteren Platte 28a kann in seinem Abstand durch Verschieben mittels der Führungen 50a verstellt werden.

In der Verstaustellung der Tischvorrichtung 16a sind die beiden Platten 26a, 28a, die den Grundkörper 18a bilden, aneinander geklappt. Das Scharnierelement 40a ist dabei in der Verstaustellung in einer eingeklappten Stellung, wobei die Platten 26a, 28a über das Scharnierelement 40a parallel zueinander ausgerichtet sind. An dem zweiten hinteren Ende sind die beiden Platten 26a, 28a über die Führungen 50a der Lagerungen 46a zueinander geführt und die Befestigungselemente 56a sind an einem ersten oberen Ende der schrägen Nut 52a angeordnet. Die beiden Platten 26a, 28a sind in der Verstaustellung in einer im Wesentlichen vertikalen Stellung ausgerichtet. Dabei ist die Platte 26a, die die Tischoberfläche ausbildet, an die Rückenlehne 12a angeklappt. Dabei ist der Grundkörper 18a von einer Sicherungsvorrichtung 58a in der Verstaustellung gehalten. Die Sicherungsvorrichtung ist von einem schwenkbaren Hebel 60a gebildet, der mit der Rückenlehne verbunden ist und der über das erste, obere Ende der Platten 26a, 28a übergreift und die Platten 26a, 28a dadurch in der Verstaustellung fixiert. In der Verstaustellung sind die schwenkbar mit der Rückenlehne 12a verbundenen Gelenkelemente 42a, 44a an die Rückenlehne 12a angeklappt. Um die Tischvorrichtung 16a aus der Verstaustellung herauszubewegen, wird zunächst die Sicherungsvorrichtung 58a durch Verschwenken des Hebels 60a gelöst. Danach wird der Grundkörper 18a herunter geklappt, dabei wird die obere Platte 26a um die Drehlager 48a geschwenkt und die zweite Platte 28a in der Führung 50a von dem oberen Ende an das untere Ende verschoben. Dadurch ändert sich an dem hinteren, zweiten Ende der Abstand zwischen den beiden Platten 26a, 28a. Dabei werden die beiden Platten 26a, 28a über das Scharnierelement 40a zueinander verschwenkt. Die beiden Platten 26a, 28a stehen in der Gebrauchsstellung in einem Winkel von etwa 30 Grad zueinander. Grundsätzlich sind hier auch andere Winkel zwischen 5 Grad und 60 Grad denkbar. Durch die Verschwenkung der Platten über das Scharnierelement 40a und die Verschiebung zueinander über die Führungen 50a werden die Tiefenerstreckungen 22a, 24a des Grundkörpers 18a bei der Verstellung verändert. Dabei sind die Tiefenerstreckungen 22a, 24a des Grundkörpers in der Verstaustellung kleiner als in der Gebrauchsstellung. Dadurch, dass die Platten 26a, 28a des Grundkörpers 18a in der Verstaustellung aneinander anliegen, sind die Tiefenerstreckungen 22a, 24a des Grundkörpers 18a in der Verstaustellung und der Gebrauchsstellung im Wesentlichen gleich groß. In der Gebrauchsstellung sind die beiden Tiefenerstreckung 22a, 24a jeweils größer als in der Verstaustellung. In der Gebrauchsstellung ist die Tiefenerstreckung 22a an dem vorderen, ersten Ende der Platten 26a, 26a kleiner als die Tiefenerstreckung 24a an dem hinteren Ende der Platten 26a, 28a. Durch die dreiecksförmige Anordnung der Platten 26a, 28a in der Gebrauchsstellung kann eine besonders vorteilhaft stabile Tischvorrichtung bereitgestellt und Kräfte, die auf den Grundkörper wirken, besonders einfach in die Rückenlehne 12a abgeleitet werden. In der Verstaustellung hingegen kann die Tischvorrichtung 16a durch die Verkleinerung der Tiefenerstreckungen 22a, 24a des Grundkörpers 18a besonders vorteilhaft platzsparend an die Rückenlehne 12a angeklappt werden.

Grundsätzlich ist es auch denkbar, dass der Grundkörper 18a Teil einer anderen Vorrichtung einer Sitzvorrichtung ist, wie beispielsweise einer Armlehnenvorrichtung, Konsolenvorrichtung oder einer Tablethaltevorrichtung.

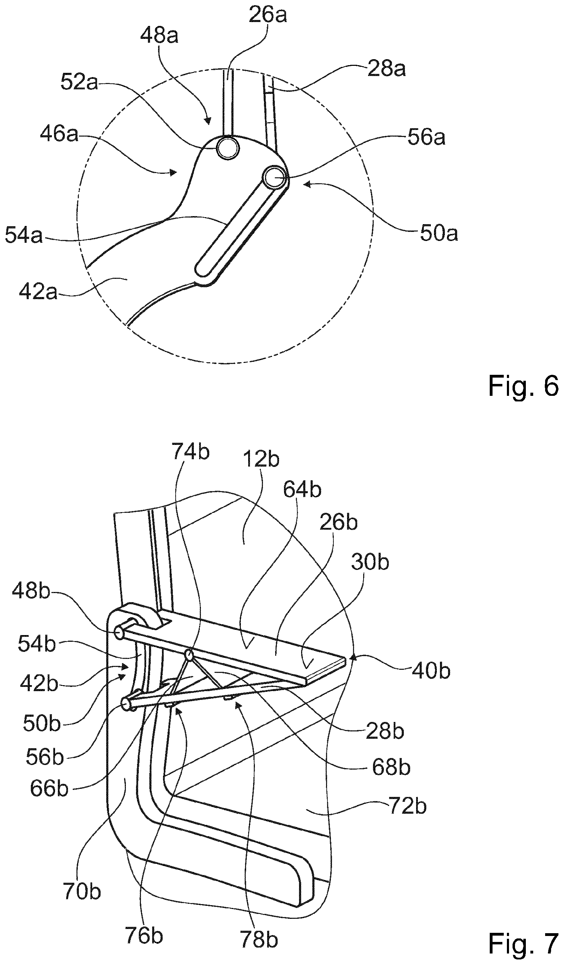

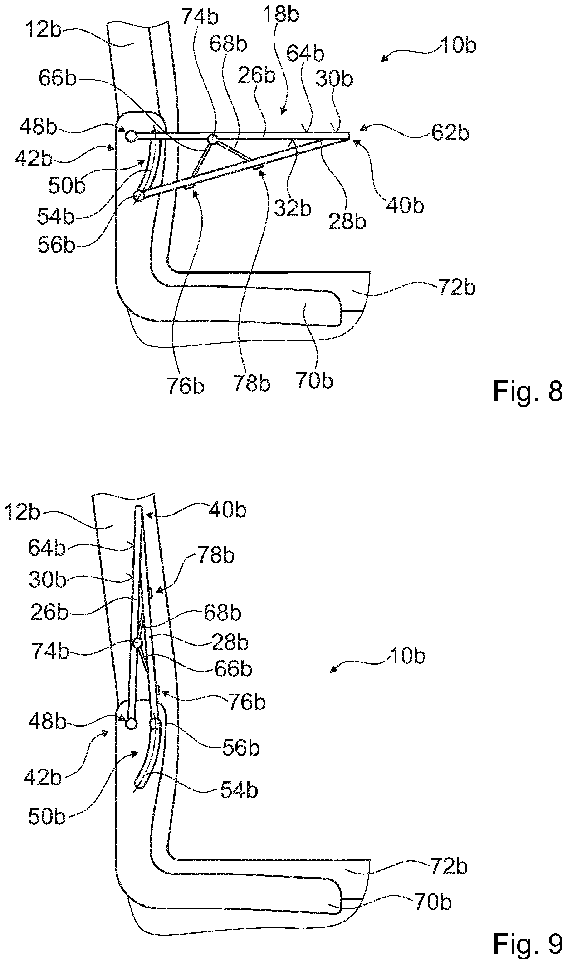

In Fig. 7 bis 9 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 6, verwiesen werden kann. Zur Unterscheidung der Ausführungsbeispiele ist der Buchstabe a den Bezugszeichen des Ausführungsbeispiels in Fig. 1 bis 6 nachgestellt. In den Ausführungsbeispielen der Fig. 7 bis 9 ist der Buchstabe a durch den Buchstaben b ersetzt.

Die Figuren 7 bis 9 zeigen ein zweites Ausführungsbeispiel einer erfindungsgemäßen Sitzvorrichtung. Die Sitzvorrichtung ist als eine Flugzeugsitzvorrichtung ausgebildet. Die als Flugzeugsitzvorrichtung ausgebildete Sitzvorrichtung ist Teil eines lediglich teilweise dargestellten Flugzeugsitzes 10b. Grundsätzlich ist es auch denkbar, dass die Sitzvorrichtung als Teil eines anderen Sitzes, wie beispielsweise eines Passagiersitzes in einem Bus oder einem anderen Transportmittel ausgebildet ist. Der Flugzeugsitz 10b umfasst einen Sitzboden 72b. Der Sitzboden 72b bildet eine Sitzfläche für einen Passagier aus. Der Flugzeugsitz umfasst eine Rückenlehne 12b. Die Rückenlehne ist an einem hinteren Ende des Sitzbodens 72b angeordnet.

Die Flugzeugsitzvorrichtung umfasst eine Armlehnenvorrichtung 62b. Die Flugzeugsitzvorrichtung umfasst auch eine zweite Armlehnenvorrichtung, die hier nicht näher dargestellt oder beschrieben ist, die im Wesentlichen gleich ausgebildet ist, wie die im Folgenden beschriebene Armlehnenvorrichtung 62b. Die Armlehnenvorrichtung 62b ist dazu vorgesehen an dem Flugzeugsitz 10b angebracht zu werden. Die Armlehnenvorrichtung 62b ist dazu vorgesehen, einen Armablagebereich 64b für einen auf dem Flugzeugsitz 10b sitzenden Passagier bereitzustellen, der neben einem Sitzbereich des Flugzeugsitzes 10b angeordnet ist. Die Armlehnenvorrichtung 62b ist dazu vorgesehen, zwischen einer Gebrauchsposition und einer Verstauposition verstellt zu werden. Die Armlehnenvorrichtung 62b ist dazu vorgesehen, in der Gebrauchsposition den Armablagebereich 64b bereitzustellen. Die Armlehnenvorrichtung 62b ist in einer Verstauposition dazu vorgesehen, möglichst platzsparend verstaut zu werden. Dabei ist die Armlehnenvorrichtung 62b in der Verstauposition vorzugsweise im Wesentlichen parallel zu der Rückenlehne 12b angeordnet.

Die Sitzvorrichtung umfasst einen Grundkörper 18b. Der Grundkörper 18b weist zwei Funktionsstellungen auf. Grundsätzlich ist es auch denkbar, dass der Grundkörper 18b weitere Funktionsstellungen aufweist. Der Grundkörper 18b ist als ein Armlehnengrundkörper ausgebildet. Der Grundkörper 18b ist Teil der Armlehnenvorrichtung 62b. Der als Armlehnengrundkörper ausgebildete Grundkörper 18b bildet zumindest in einer Funktionsstellung den Armablagebereich 64b aus, auf dem ein Passagier seinen Arm ablegen kann. Eine erste Funktionsstellung des Grundkörpers 18b ist als eine Verstaustellung ausgebildet. Die als Verstaustellung ausgebildete Funktionsstellung des Grundkörpers 18b bildet die Verstauposition der Armlehnenvorrichtung 62b aus. In der Verstaustellung ist der Grundkörper 18b im Wesentlichen parallel zu der Rückenlehne 12b ausgerichtet. In der Verstaustellung ist der Armablagebereich 64b, der von dem Grundkörper 18b ausgebildet wird, nach hinten gewandt. Eine zweite Funktionsstellung des Grundkörpers 18b ist als eine Gebrauchsstellung ausgebildet. In der als Gebrauchsstellung ausgebildeten Funktionsstellung ist der Grundkörper 18b so ausgerichtet, dass der Armablagebereich 64b im Wesentlichen parallel zu einem Sitzbereich des Flugzeugsitzes 10b ausgerichtet ist. In der als Gebrauchsstellung ausgebildeten Funktionsstellung ist der Armablagebereich 64b des Grundkörpers im Wesentlichen horizontal ausgerichtet.

In den beiden Funktionsstellungen weist der Grundkörper 18b unterschiedliche Tiefenerstreckungen 22b, 24b auf. Eine Tiefenerstreckung 22b, 24b des Grundkörpers 18b ist dabei als eine Erstreckung senkrecht zu einer Haupterstreckungsebene des Grundkörpers 18b ausgebildet. Die Haupterstreckungsebene des Grundkörpers 18b ist dabei von dem Armablagebereich 64b gebildet. Dabei ist die erste Tiefenerstreckung 22b als eine vordere Tiefenerstreckung des Grundkörpers 18b ausgebildet. Die vordere Tiefenerstreckung 22b ist in einem vorderen Bereich des Grundkörpers 18b angeordnet. Der vordere Bereich des Grundkörpers 18b ist dabei als ein der Rückenlehne 12b abgewandtes Ende der Armlehnenvorrichtung 62b ausgebildet. Die zweite Tiefenerstreckung 24b ist als eine hintere Tiefenerstreckung des Grundkörpers 18b ausgebildet. Die hintere Tiefenerstreckung 24b ist in einem hinteren Bereich des Grundkörpers 18b angeordnet. Der hintere Bereich des Grundkörpers 18b ist dabei als ein der Rückenlehne 12b zugewandtes Ende der Armlehnenvorrichtung 62b ausgebildet. Die beiden gezeigten Tiefenerstreckungen 22b, 24b stellen dabei lediglich zwei exemplarische Tiefenerstreckungen dar. Der Grundkörper weist über seine gesamte Erstreckung zwischen dem vorderen Ende und dem hinteren Ende Tiefenerstreckungen auf, die hier aber im Detail nicht näher beschrieben werden sollen.

In der ersten, als Verstaustellung ausgebildeten Funktionsstellung sind die Tiefenerstreckungen 22b, 24b jeweils kleiner als in der als Gebrauchsstellung ausgebildeten Funktionsstellung. Die Tiefenerstreckungen 22b, 24b weisen in der als Verstaustellung ausgebildeten Funktionsstellung einen Wert auf, der kleiner ist als ein Wert der jeweiligen Tiefenerstreckung 22b, 24b in der als Gebrauchsstellung ausgebildeten Funktionsstellung. Mit den Tiefenerstreckungen 22b, 24b verhält es sich in den beiden Funktionsstellungen im Wesentlichen gleich wie bei denen aus dem ersten Ausführungsbeispiel, weswegen hierauf im Folgenden nicht näher eingegangen werden soll.

Der Grundkörper 18b ist aus einer ersten Platte 26b und einer zweiten Platte 28b gebildet. Die beiden Platten 26b, 28b, aus denen der Grundkörper 18b gebildet ist, sind an ihrem ersten, vorderen Ende miteinander verbunden. Die erste Platte 26b ist als eine obere Platte ausgebildet. Die obere Platte 26b weist eine im Wesentlichen rechteckige Form auf. Die obere Platte 26b bildet den Armablagebereich 64b der Armlehnenvorrichtung 62b aus. Die obere Platte 26b weist dabei eine Oberseite 30b, die die Tischoberfläche 20b ausbildet und eine Unterseite 32b auf, die eine der Oberseite 30b gegenüberliegende Seite ausbildet. Die ober Platte 26b ist dabei als eine ebene, durchgängige Platte ausgebildet. Die untere Platte 28b ist ebenfalls als eine ebene, durchgängige Platte ausgebildet. Die beiden Platten 26b, 28b weisen dabei im Wesentlichen eine gleiche Form auf. Die erste Platte 26b und die zweite Platte 28b sind an ihren ersten, vorderen Enden verschwenkbar miteinander verbunden. Zur Verbindung der beiden Platten 26b, 28b weist der Grundkörper 18b ein Scharnierelement 40b auf. Über das Scharnierelement 40b sind die erste Platte 26b und die zweite Platte 28b verschwenkbar miteinander verbunden.

Die Sitzvorrichtung umfasst ein Gelenkelement 42b. Das Gelenkelement 42b ist dazu vorgesehen den Grundkörper 18b schwenkbar an den Flugzeugsitz anzubinden. Das Gelenkelement 42b ist als ein Teil eines Sitzteilers 70b ausgebildet. Der Sitzteiler 70b begrenzt den Sitzboden seitlich. Das Gelenkelement 42b bildet ein Drehlager 48b und eine Führung 50b aus. Das Drehlager 48b weist ein Befestigungselement 52b auf, über die die obere Platte 26b drehbar an dem Sitzteiler 70b gelagert ist. Die Führung 50b ist als eine Radialführung ausgebildet. Die als Radialführung ausgebildete Führung weist eine Nut 54b auf, die einen teilkreisförmigen Verlauf aufweist. Die Nut 54b ist dabei in den Sitzteiler 70b eingebracht. Die Führung 50b weist ein Befestigungselement 56b auf, das mit der unteren Platte 28b gekoppelt ist und in der Nut 54b angeordnet ist. In der Verstaustellung ist das Befestigungselement 56b und damit die untere zweite Platte 28b an einem oberen Ende der Nut 54b angeordnet. In der Gebrauchsstellung ist das Befestigungselement 56b und damit die untere zweite Platte 28b an einem unteren Ende der Nut 54b angeordnet. Bei einer Verstellung zwischen der Gebrauchsstellung und der Verstaustellung verfährt das Befestigungselement 56b in der Nut 54b zwischen dem untern Ende und dem oberen Ende.

Der Grundkörper 18b weist zwei Stützelemente 66b, 68b auf. Die Stützelemente 66b, 68b sind zur Versteifung des Grundkörpers 18b vorgesehen. Die Stützelemente 66b, 68b sind zur Übertragung von Kräften zwischen den beiden Platten 26b, 28b des Grundkörpers vorgesehen. Die Stützelemente 66b, 68b sind als Platten ausgebildet. Die Stützelemente 66b, 68b sind jeweils mit einem ersten Ende mit der ersten Platte 26b und mit einem zweiten Ende mit dem Stützelement 68b mit der zweiten Platte 68b verbunden. Die Stützelemente 66b, 68b sind an der Unterseite 32b der oberen Platte 26b über eine Drehlagerung 74b drehbar an die erste Platte 26b angebunden. Dabei sind die beiden Stützelemente 66b, 68b über die gleiche Drehlagerung 74b schwenkbar an die erste Platte 26b angebunden. Die Stützelemente 66b, 68b sind jeweils über eine Linearführung 76b, 78b mit der unteren Platte 28b verbunden. Dabei erstrecken sich die beiden Stützelemente 66b, 68b jeweils in unterschiedliche Richtungen von der Drehlagerung 74b weg, so dass eine Dreiecksform entsteht. Die Linearführungen 76b, 68b weisen an ihren beiden Enden jeweils nicht näher dargestellte Anschläge auf, in denen die Stützelemente 66b, 68b jeweils in der Verstaustellung und in der Gebrauchsstellung verrastet werden können, so dass jeweils eine stabile Verstaustellung und eine stabile Gebrauchsstellung erreicht werden kann.

**Bezugszeichen**

| | | | |
|---|---|---|---|
| 10 | Flugzeugsitz | 68 | Stützelement |
| 12 | Rückenlehne | 70 | Sitzteiler |
| 14 | Rückseite | 72 | Sitzboden |
| 16 | Tischvorrichtung | 74 | Drehlagerung |
| 18 | Grundkörper | 76 | Linearführung |
| 20 | Tischoberfläche | 78 | Linearführung |
| 22 | Tiefenerstreckung | | |
| 24 | Tiefenerstreckung | | |
| 26 | Erste Platte | | |
| 28 | Zweite Platte | | |
| 30 | Oberseite | | |
| 32 | Unterseite | | |
| 34 | Teilbereich | | |
| 36 | Teilbereich | | |
| 38 | Mittelbereich | | |
| 40 | Scharnierelement | | |
| 42 | Gelenkelement | | |
| 44 | Gelenkelement | | |
| 46 | Lagerung | | |
| 48 | Drehlager | | |
| 50 | Führung | | |
| 52 | Befestigungselement | | |
| 54 | Nut | | |
| 56 | Befestigungselement | | |
| 58 | Sicherungsvorrichtung | | |
| 60 | Hebel | | |
| 62 | Armlehnenvorrichtung | | |
| 64 | Armablagebereich | | |
| 66 | Stützelement | | |

## Patentansprüche

1. Sitzvorrichtung, insbesondere Flugzeugsitzvorrichtung, mit einem Grundkörper (18a; 18b), der in zumindest zwei Funktionsstellungen unterschiedliche Tiefenerstreckungen (22a, 24a; 22b, 24b) aufweist, wobei der Grundkörper (18a; 18b) aus zumindest einer ersten Platte (26a; 26b) und einer zweiten Platte (28a; 28b) gebildet ist, die zumindest an einem ersten Ende verschwenkbar miteinander verbunden sind, **gekennzeichnet durch** wenigstens ein Gelenkelement (42a, 44a; 42b, 44b), mittels dessen der Grundkörper (18a; 18b) verschwenkbar ist und das wenigstens eine Führung (50) aufweist, über die die erste Platte (26a; 26b) und die zweite Platte (28a; 28b) an einem zweiten Ende zueinander verschiebbar sind.

2. Sitzvorrichtung nach Anspruch 1, **dadurch gekennzeichnet, dass** die Tiefenerstreckung (22a, 24a; 22b, 24b) in den zumindest zwei Funktionsstellungen dazu vorgesehen ist, lediglich in einem Teilbereich des Grundkörpers (18a; 18b) geändert zu werden.

3. Sitzvorrichtung nach Anspruch 1 oder 2, **dadurch gekennzeichnet, dass** der Grundkörper (18a) als ein Tischgrundkörper ausgebildet ist.

4. Sitzvorrichtung nach einem der vorhergehenden Ansprüche, **dadurch gekennzeichnet, dass** der Grundkörper (18a; 18b) ein Scharnierelement (40a; 40b) aufweist, das die erste Platte (26a; 26b) und die zweite Platte (28a; 28b) an dem ersten Ende miteinander verbindet.

5. Sitzvorrichtung nach einem der vorhergehenden Ansprüche, **dadurch gekennzeichnet, dass** die Führung (50a) wenigstens eine Nut (52a) aufweist, die in das Gelenkelement (42a, 44a) eingebracht ist.

6. Sitzvorrichtung nach einem der vorhergehenden Ansprüche, **dadurch gekennzeichnet, dass** die zweite Platte (28a; 28b) des Grundkörpers (18a; 18b) wenigstens ein Befestigungselement (56a; 56b) aufweist, das in die zumindest eine Nut (52a; 52b) der Führung (50a; 50b) eingreift.

7. Sitzvorrichtung nach einen der vorhergehenden Ansprüche, **dadurch gekennzeichnet, dass** der Grundkörper (18b) als eine Armlehne ausgebildet ist.

8. Sitzvorrichtung nach einem der vorhergehenden Ansprüche, **dadurch gekennzeichnet, dass** der Grundkörper (18b) wenigstens ein Stützelement (66b, 68b) aufweist, das zur Stabilisierung zwischen der ersten Platte (26b) und der zweiten Platte (28b) angeordnet sind.

9. Flugzeugsitz mit einer Sitzvorrichtung nach einem der vorhergehenden Ansprüche.

## Claims

1. Seat device, in particular aircraft seat device, with a base body (18a; 18b) comprising different depth extensions (22a, 24a; 22b, 24b) in at least two functional positions, the base body (18a; 18b) being implemented of at least one first panel (26a; 26b) and a second panel (28a; 28b), which are connected to one another pivotably at least on a first end, **characterised by** at least one articulate element (42a, 44a; 42b, 44b), by means of which the base body (18a; 18b) is pivotable and which comprises at least one guidance (50), via which the first panel (26a; 26b) and the second panel (28a; 28b) are displaceable relative to one another on a second end.

2. Seat device according to claim 1, **characterised in that** the depth extension (22a, 24a; 22b, 24b) is configured, in the at least two functional positions, to be changed only in a partial region of the base body (18a; 18b).

3. Seat device according to claim 1 or 2, **characterised in that** the base body (18a) is embodied as a table base body.

4. Seat device according to one of the preceding claims, **characterised in that** the base body (18a; 18b) comprises a hinge element (40a; 40b) connecting the first panel (26a; 26b) and the second panel (28a; 28b) to one another on the first end.

5. Seat device according to one of the preceding claims, **characterised in that** the guidance (50a) comprises at least one groove (52a), which is introduced in the articulate element (42a, 44a).

6. Seat device according to one of the preceding claims, **characterised in that** the second panel (28a; 28b) of the base body (18a; 18b) comprises at least one fixation element (56a; 56b), which engages in the at least one groove (52a; 52b) of the guidance (50a; 50b).

7. Seat device according to one of the preceding claims, **characterised in that** the base body (18b) is embodied as an armrest.

8. Seat device according to one of the preceding claims, **characterised in that** the base body (18b) comprises at least one support element (66b, 68b) that is arranged between the first panel (26b) and the second panel (28b) for stabilization purposes.

9. Aircraft seat with a seat device according to one of the preceding claims.

## Revendications

1. Dispositif de siège, notamment dispositif de siège d'avion, avec un corps de base (18a ; 18b) ayant, dans au moins deux positions fonctionnelles, des extensions en profondeur différentes (22a, 24a ; 22b, 24b), le corps de base (18a ; 18b) étant formé d'au moins un premier panneau (26a ; 26b) et un deuxième panneau (28a ; 28b), qui sont pivotablement raccordés l'un avec l'autre au moins à une première extrémité,
**caractérisé par** au moins un élément articulaire (42a, 44a ; 42b, 44b), par le biais duquel le corps de base (18a ; 18b) est pivotable et qui comporte au moins un guidage (50), par lequel le premier panneau (26a ; 26b) et le deuxième panneau (28a ; 28b) sont déplaçables l'un par rapport à l'autre à une deuxième extrémité.

2. Dispositif de siège selon la revendication 1,
**caractérisé en ce que** l'extension en profondeur (22a, 24a ; 22b, 24b) est configurée, dans les au moins deux positions fonctionnelles, à être changée seulement dans une zone partielle du corps de base (18a ; 18b).

3. Dispositif de siège selon l'une quelconque des revendications 1 ou 2,
**caractérisé en ce que** le corps de base (18a) est implémenté comme corps de base de table.

4. Dispositif de siège selon l'une quelconque des revendications précédentes,
**caractérisé en ce que** le corps de base (18a ; 18b) comporte un élément charnière (40a ; 40b) raccordant le premier panneau (26a ; 26b) et le deuxième panneau (28a ; 28b) l'un avec l'autre à la première extrémité.

5. Dispositif de siège selon l'une quelconque des revendications précédentes,
**caractérisé en ce que** le guidage (50a) comporte au moins une rainure (52a) introduite dans l'élément articulaire (42a, 44a).

6. Dispositif de siège selon l'une quelconque des revendications précédentes,
**caractérisé en ce que** le deuxième panneau (28a ; 28b) du corps de base (18a ; 18b) comporte au moins un élément de fixation (56a ; 56b) engrenant dans l'au moins une rainure (52a ; 52b) du guidage (50a ; 50b).

7. Dispositif de siège selon l'une quelconque des revendications précédentes,
**caractérisé en ce que** le corps de base (18b) est implémenté comme appuie-bras.

8. Dispositif de siège selon l'une quelconque des revendications précédentes,
**caractérisé en ce que** le corps de base (18b) comporte au moins un élément de support (66b, 68b) disposé entre le premier panneau (26b) et le deuxième panneau (28b) pour le bût de stabilisation.

9. Siège d'avion avec un dispositif de siège selon l'une quelconque des revendications précédentes.
